# EUROPÄISCHE PATENTSCHRIFT

(11) **EP 0 337 065 B1**
(45) Veröffentlichungstag und Bekanntmachung des Hinweises auf die Patenterteilung: **07.01.1993**
(21) Anmeldenummer: 89102277.4
(22) Anmeldetag: 10.02.1989
(51) Int. Cl.: B23K 3/02, G05D 23/22

(54) **Verfahren und Vorrichtung zum Betrieb einer Lötstation**
Method and device for operating a soldering station
Méthode et dispositif de fonctionnement pour un poste de soudure

(30) Priorität: 12.04.1988 DE 3812139
(43) Veröffentlichungstag der Anmeldung: 18.10.1989
(73) Patentinhaber: ERSA Ernst Sachs KG GmbH & Co., 97877 Wertheim (DE)
(72) Erfinder: Weinbrecht, Michael, D-6980 Wertheim (DE)
(74) Vertreter: Riebling, Peter, Dr.-Ing.

(56) Entgegenhaltungen:
- EP-A- 0 004 035
- EP-A- 0 102 315
- EP-A- 0 103 548
- EP-A- 0 202 401
- WO-A-82/02745
- PATENT ABSTRACTS OF JAPAN Band 10, Nr. 191 (M-495)(2247) 4, Juli 1986 ; & JP - A - 61037368 (TAMOTSU TAKEDA)

## Beschreibung

Die Erfindung betrifft ein Verfahren mit den Merkmalen des Oberbegriffs von Patentanspruch 1. Außerdem bezieht sich die Erfindung auf einen Lötkolben zur Durchführung des Verfahrens mit den Merkmalen des Oberbegriffs von Patentanspruch 4.

Ein derartiges Verfahren und ein solcher Lötkolben sind beschrieben in der JP-A-61-37 368. Das dort verwendete Verfahren ist statisch. Der vorderste der Temperaturfühler befindet sich im eigentlichen Lötspitzenkörper, d. h. beabstandet von der Lötspitze.

Ein solches, statisches Regelverfahren führt aber zwangsläufig zu Kompromißen bei der Ausführung der Regelung.

Demgegenüber liegt der Erfindung die Aufgabe zugrunde, ein derartiges Verfahren und einen Lötkolben zur Durchführung des Verfahrens vorzuschlagen, daß unabhängig von der Größe des Wärmeabflußes von der Lötkolbenspitze die Temperatur der Lötkolbenspitze stets konstant gehalten wird.

Die Lösung dieser Aufgabe gelingt bei dem erfindungsgemäßen Verfahrens durch die Merkmale von Patentanspruch 1. Bei der erfindungsgemäßen Lötvorrichtung gelingt dies durch die Merkmale von Patentanspruch 4.

Aus den gemessenen Werten wird mittels eines rechnerischen Modells auf die nicht meßbare Temperatur an der Spitze des Lötkolbens zurückgeschlossen. Hierzu werden Größen wie Temperatur, Temperaturänderungsgeschwindigkeit, Temperaturhub und dergleichen ausgewertet.

Zur Regelung werden gemessene bzw. errechnete Parameter herangezogen und zwar insofern, daß die Strecke entweder auf den durch das Streckenmodell errechneten Wert der Lötspitzentemperatur oder auf andere, aus den gemessenen Größen ermittelten Werten geregelt wird.

Damit wird der wesentliche Vorteil erreicht, daß nun stets im Rechner die aktuelle Lötspitzentemperatur unabhängig von dem jeweils geltenden Belastungsfall (Wärmeabfluß an der Lötspitze) ermittelt werden kann und dementsprechend die Leistung des Heizkörpers nachgeregelt werden kann.

Zur Stellung eines entsprechenden Regelmodells können ansich beliebig viele Temperaturfühler längs des Lötspitzenkörpers im gegenseitigen Abstand voneinander angeordnet werden. Aus meßtechnischen und schaltungstechnischen Gründen wird es jedoch bevorzugt, möglichst wenige Temperaturfühler zu verwenden. Hierbei gibt es wiederum mehrere Möglichkeiten, und unter diesen Möglichkeiten wird die Verwendung von Zwei voneinander unabhängigen Temperaturfühlern bevorzugt.

Damit das vom Rechner verwendete Modell der Regelstrecke möglichst genau wird, wird es hierbei bevorzugt, wenn der erste Meßfühler in der Lötspitze angeordnet ist, ohne selbst jedoch den Wärmeabfluß von der Lötspitze zu behindern.

Hierbei wird es bevorzugt, wenn dieser Fühler als Thermoelement ausgebildet ist, denn es ist bisher lediglich mit Thermoelementen möglich, diese nahe an der Spitze anzuordnen, so daß sie einerseits nicht die Spitzengeometrie nachteilig verändern und andererseits auch nicht den Wärmefluß behindern.

Als günstiges Material für ein Thermoelement hat sich ein NI-CR-NI-Material herausgestellt. Man benötigt jetzt lediglich nur noch einen weiteren Temperaturfühler, der im Abstand von dem ersten Temperaturfühler, der als Thermoelement ausgebildet ist, in Richtung zum Heizkörper angeordnet ist.

Hierbei wird es bevorzugt, wenn der Heizkörper selbst als Temperaturfühler herangezogen wird, weil hierdurch wiederum der Schaltungsaufwand wesentlich vermindert wird.

Verwendet man nämlich erfindungsgemäss als Heizkörper ein Keramikrohr, welches mit einer elektrisch leitfähigen, stromdurchflossenen Beschichtung versehen ist, dann kann man die Art der Beschichtung so wählen, daß elektrisch gesehen die Beschichtung den Charakter eines PCT-Widerstandes erhält. Durch Messung des Spannungsabfalls am Heizkörper und durch Messung des Stromflußes durch den Heizkörper kann damit der aktuelle Widerstand des Heizkörpers ermittelt werden und daraus die aktuelle Heizkörpertemperatur.

Die Verwendung eines PCT-Materials als Heizkörper hat den weiteren Vorteil, daß bei einem kalten Heizkörper ein sehr geringer elektrischer Widerstand vorhanden ist, so daß eine sehr schnelle Aufheizung erfolgt, so daß hierdurch auch schnelle Wärmeflußänderungen an der Lötspitze schnell ausgeglichen werden können.

Die genannten Meßwerte dieser beiden Temperaturfühler werden an den Analog-Eingang eines Digitalrechners gegeben, der diese Werte über einen Analog-Digitalwandler intern verarbeitet und als Meßgrößen in sein intern erstelltes Rechenprogramm einspeist.

Das Rechenprogramm ermittelt daraus die nicht gemessene Temperatur der Lötspitze. Hierzu wird die Temperaturänderungsgeschwindigkeit ausgewertet.

Bestimmte Prozeßdaten wie Betriebsmodus, Sollwerte usw. können über eine Tastatur eingegeben bzw. über eine Anzeige sichtbar gemacht werden. Beim Abschalten des Gerätes sind verschiedene Parameter z.B. Sollwerte in einem nichtflüchtigen Speicher ablegbar.

Zur Bestimmung der Temperatur im Lötkolben werden folgende Größen gemessen:
1. die Spannung, die das Thermoelement im Lötkolben abgibt,
2. eine der Klemmstellentemperatur proportionale Spannung mittels eines Meßwiderstandes,
3. die Spannung, die am Heizkörper anliegt,
4. eine dem Heizkörperstrom proportionale Spannung mittels eines Meßwiderstandes. (Rm)

Diese Größen werden verstärkt und im AD-Wandler des Mikroprozessors mit 8 oder 9 Bit aufgelöst. Aus den so gewonnenen digitalen Werten können ϑHk und ϑTH.e.errechnet und zur Regelung auf oben genannte Weise herangezogen werden.

Der Lötkolben wird an berührsicherer Wechselspannung betrieben. Als Leistungsteller dient ein Halbleiterschalter (Triac). Der Leistungsteller wird immer im Null-Durchgang der Wechselspannung ein-bzw. ausgeschaltet. Zur Synchronisation wird dem Mikroprozessor ein Rechtecksignal zugeführt, dessen Flanke mit dem Null-Durchgang der Lastspannung fällt.

Mit dem Mikroprozessor kann über eine serielle Schnittstelle kommuniziert werden.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigen:

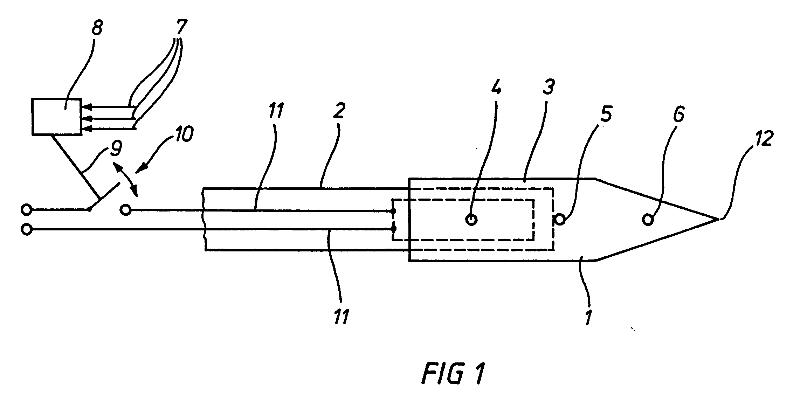

- Figur 1:: schematisiert gezeichnet einen Lötkolben nach der Erfindung,
- Figur 2:: ein Diagramm der Temperaturverteilung über den Lötspitzenkörper mit Darstellung verschiedener Lastzustände;
- Figur 3:: schematisiert die Ausbildung des Lötspitzenkörpers als Regelstrecke für die Ermittlung der Lötspitzentemperatur,
- Figur 4:: schematisiert ein Blockschaltbild einer Ausführungsform der Erfindung.

Schematisch ist ein Lötkolben mit seinem Lötspitzenkörper 1 und seinem Stielrohr 2 gezeigt, wobei ein Heizkörper 3 in das rückwärtige Ende des Lötspitzenkörpers 1 eingebettet ist.

Über die Länge des Lötspitzenkörpers 1 verteilt und auf dessen Achse sitzend sind mehrere Temperaturfühler 4,5,6 angeordnet.

Deren Ausgangssignale werden über Leitungen 7 einem Rechner 8 zugeleitet, der die von den Temperaturfühlern gemessenen Temperaturen auswertet. Der Rechner wiederum ist über eine Leitung 9 mit einem Schalter 10 verbunden, der eine Heizleitung 11 zum Heizkörper 3 schaltet. Die Leitungen 7 verlaufen auch im Kabel der Heizleitung 11.

Dem Rechner wurde ein Programm eingegeben, welches aus den momentan von den Temperaturfühlern 4,5,6 gemessenen Temperaturen auf die wichtige momentane Temperatur der Lötspitze 12 rückschließen lässt. Dementsprechend steuert er den Schalter 10, der den Heizkörper 3 entsprechend einschaltet bzw. ausschaltet.

Der Rechner berücksichtigt neben experimentell gewonnenen Daten nicht nur die gemessenen Temperaturen, sondern auch die Änderungsgeschwindigkeiten der Temperaturen, die Abstände zwischen den Temperaturfühlern und so fort.

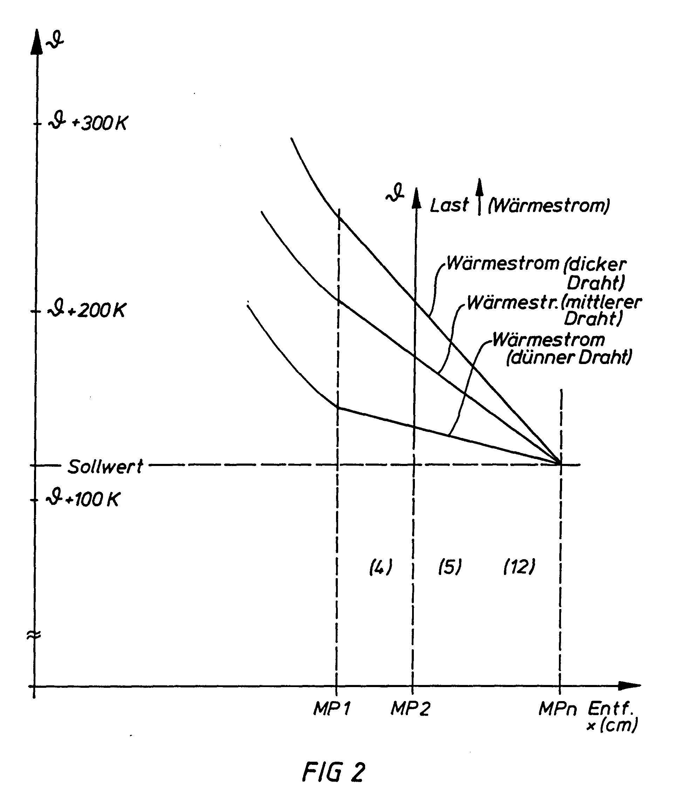

Die Figur 2 zeigt ein Diagramm der Temperaturverteilung längs des Lötspitzenkörpers 1 mit Markierung von drei beispielsweise angenommenen Temperaturfühlern 4,5,12. Hierbei ist auf der Abszisse die Entfernung in cm vom - z.B. - Fuß des Lötspitzenkörpers 1 aufgetragen und auf der Ordinaate die Temperatur.

Im Diagramm selbst sind drei verschiedene Lastzustände aufgetragen, wobei man erkennt, daß der Wärmestrom 3 beim Löten eines dünnen Drahtes entsteht, der Wärmestrom 2 beim Löten eines mittleren Drahtes und der Wärmestrom 3 beim Löten eines dicken Drahtes. Dementsprechend ändert sich der Wärmeabfluß von der Lötspitze.

Erfindungsgemäss arbeitet die Regelung nun so, daß stets die Lötspitze 12 auf der gleichen Temperatur (Sollwert) gehalten wird. Dies war mit bisher bekannten Regelungen nicht möglich.

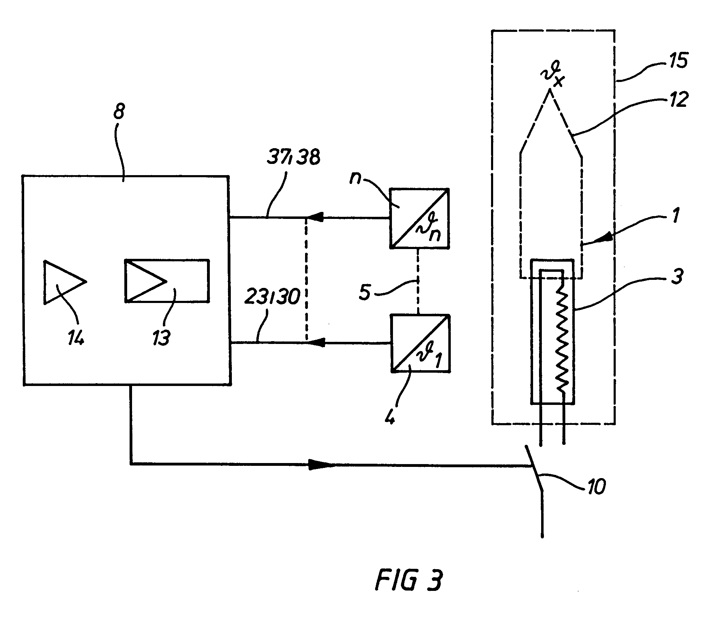

Bei bisher bekannten Regelungen wurde die Temperatur im Bereich des Heizkörpers, z.B. am Ort des Temperaturfühlers 4 konstant gehalten, und dies führte neben der Verteilung der Wärmeströme als Kurvenschar gemäss Figur 2 zu einer starken Veränderung der Lötspitzentemperatur. Dies wird erfindungsgemäss nun durch die in Figur 3 schematisiert gezeichnete Regelung vermieden.

Hierbei ist erkennbar, daß der Lötspitzenkörper 1 als Regelstrecke in seiner Längserstreckung aufgefasst wird und daß längs der Regelstrecke eine Vielzahl von Temperaturfühlern 4,5....n angeordnet sind.

Die Signale dieser Temperaturfühler 4,5....n werden über die Leitungen 23,30; 37,38 dem Rechner 8 eingegeben, der einen Regler 13 enthält, der über den Schalter 10 dem Heizkörper 3 immer gerade soviel Wärme zuführt, daß die Temperatur an der Lötspitze 12 unabhängig von dem Belastungsfall (Wärmefluß) konstant bleibt. Unter anderem muß hierzu der Rechner 8 einen Verstärker 14 enthalten.

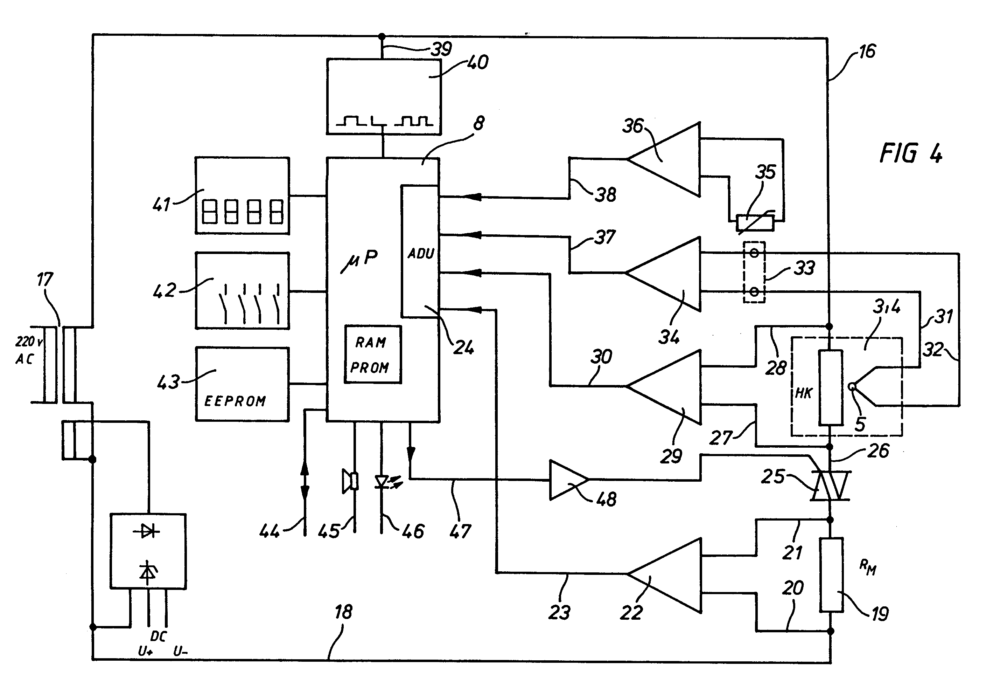

Die Figur 4 zeigt ein detailliertes Blockschaltbild.

Von einem Trafo 17 aus führt eine Leitung 18 über einen Meßwiderstand 19 und einen Leistungssteller 25 zu dem Heizkörper 3.

Der Heizkörper 3 ist über die Leitung 16 wiederum mit der Sekundärwicklung des Trafo's 17 verbunden. Die Temperaturmessung in der Nähe der Lötspitze erfolgt über einen als Thermoelement ausgebildeten Temperaturfühler 5, dessen Signale über die Leitungen 31,32 über eine Klemmstelle 33 einem Differenzverstärker 34 zugeführt werden. Der Ausgang des Differenzverstärkers 34 bildet über die Leitung 37 einen Eingang des ADU 24 des Rechners 8.

Zur Klemmstellen-Kompensation ist ein Mess-Element 35 im Eingangszweig eines Differenzverstärkers 36 vorgesehen, wobei der Differenzverstärker 36 über die Leitung 38 einen weiteren Eingang des ADU 24 bildet.

Aus den Signalen der Leitungen 37,38 wird das Temperatursignal in der Nähe der Lötspitze 12 gebildet.

Als zweites Meßsignal wird die Temperatur des Heizkörpers 3 selbst in die Messung einbezogen.

Hierzu liegen an Meßwiderstand 19 Abgriffe 20,21 an, die einem Differenzverstärker 22 zugeführt werden, der über die Leitung 23 einen weiteren Eingang mit dem ADU 24 bildet.

Hierzu erfolgt die Strommessung des Stromflußes durch den Heizkörper 3, während die Spannungsmessung über die unmittelbar dem Heizkörper 3 abgreifenden Abgriffe 27,28 erfolgt, die auf einen Differenzverstärker 29 geführt werden, der über die Leitung 30 einen Eingang des ADU 24 bildet.

Aus den Signalen der Leitungen 23 und 30 wird also die aktuelle Temperatur des Heizkörpers 3 errechnet. Die vom Rechner 8 und von dem innerhalb angeordneten Analog-Digitalwandler 24 erfassten und in digitale Werte umgewandelten Signale werden im Rechner über ein Rechenmodell so verarbeitet, daß der Ausgang der Regelstrecke durch die Leitung 47 dargestellt wird, die über einen Verstärker 48 auf das Gate des Leistungsstellers 25 arbeitet.

Man kann hierbei dem im Rechner 8 einprogrammierten Regler verschiedene Regelverhalten zuordnen. Es wird hierbei bevorzugt, dem Regler ein Proportional-Integral-Differential-Verhalten (PID) zuzuordnen.

Über die Leitung 26 ist hierbei der Leistungssteller 25 mit der Eingangsseite des Heizkörpers 3 verbunden.

Damit der Leistungssteller 25 stets nur im Nulldurchgang schaltet, ist eine Nulldurchgangserkennung 40 vorgesehen, die mit einer Leitung 39 von der Leitung 16 abzweigt und einen weiteren Eingang des Rechners 8 bildet.

Der Rechner weist im übrigen noch eine mehrstellige Digitalanzeige 41, eine Tastatur 42 und einen elektrisch programmierbaren Speicher 43 auf.

Über eine serielle Schnittstelle 44 ist hierbei über einen entsprechenden Datenbus auch die Einschaltung weiterer Lötstationen an den Rechner 8 möglich. Zusätzlich ist noch ein akustischer Melder 45 und eine optische Anzeige 46 für die Funktion des Leistungsstellers 25 vorgesehen.

Mit dem beschriebenen Verfahren und mit einer nach dem Verfahren hergestellten Lötstation ist es nun erstmals möglich, die Temperatur der Lötspitze unabhängig von dem von der Lötspitze abgeschiedenen Wärmefluß stets konstant zu halten. Die Temperatur wird also stets dem Belastungsfall nachgeregelt, wobei für das Regelverhalten verschiedene Charakteristika möglich sind.

Statt der Ermittlung des Widerstandes des Heizkörpers über eine Strom-und Spannungsmessung ist es in einer Weiterbildung der Erfindung vorgesehen, lediglich die Spannung bei einem festen Stromwert zu messen. Man stellt hierbei mit einem Komperator einen festen Stromwert ein, über den die Spannungsmessung getriggert wird. Das heisst, durch das Signal des Komparators wird der Start für die Spannungsmessung gegeben. Dadurch besteht der Vorteil, den Rechenaufwand im Prozessor zur Feststellung des Widerstandes des Heizkörpers zu verringern.

### ZEICHNUNGS-LEGENDE

- 1: Lötspitzenkörper
- 2: Stielrohr
- 3: Heizkörper
- 4: Temperaturfühler
- 5: "
- 6: "
- 7: Leitung
- 8: Rechner
- 9: Leitung
- 10: Schalter
- 11: Leitung
- 12: Lötspitze
- 13: Regler
- 14: Verstärker
- 15: Regelstrecke
- 16: Leitung
- 17: Trafo
- 18: Leitung
- 19: Meßwiderstand
- 20: Abgriff
- 21: Abgriff
- 22: Diff.-Verstärker
- 23: Leitung
- 24: ADU
- 25: Leistungssteller
- 26: Leitung
- 27: Abgriff
- 28: Abgriff
- 29: Diff.-Verstärker
- 30: Leitung
- 31: Leitung
- 32: Leitung
- 33: Klemmstelle
- 34: Diff.-Verstärker
- 35: Meßelement
- 36: Diff.-Verstärker
- 37: Leitung
- 38: Leitung
- 39: Leitung
- 40: Nulldurchgangserkennung
- 41: Anzeige
- 42: Tastatur
- 43: Speicher
- 44: serielle Schnittstelle
- 45: Melder
- 46: Anzeige
- 47: Leitung
- 48: Verstärker

## Patentansprüche

1. Verfahren zum Regeln der Betriebstemperatur eines Lötkolbens auf einen einen vorbestimmten Wert mit Hilfe einer im Lötkolben befindlichen Temperaturfühleranordnung, die, abhängig von der gemessenen Temperatur, einen Heizkörper des Lötkolbens ein- bzw. ausschaltet, wobei zur Konstanthaltung der Temperatur an der Lötspitze (12) unabhängig von dem von der Lötspitze (12) abfließenden Wärmefluß der Lötspitzenkörper (1) in seiner Längserstreckung als Regelstrecke aufgefaßt wird, auf der in gegenseitigem Abstand voneinander mehrere Temperaturfühler (4,5,6) angeordnet sind, und die von den Temperaturfühlern (4,5,6) erfaßten Werte einem Rechner (8) zugeleitet werden, der über ein rechnerisches Modell die nicht gemessene Temperatur der Lötspitze (12) ermittelt und unabhängig vom Wärmefluß konstant hält, **dadurch gekennzeichnet,** daß von den Temperaturfühlern (4,5,6) die Temperaturänderungsgeschwindigkeit erfaßt und dem Rechner (8) zugeleitet wird.

2. Verfahren nach Anspruch 1, **dadurch gekennzeichnet,** daß zur Leistungszuführung zum Heizkörper (3) ein Leistungssteller (25) verwendet wird, der von einem Regler angesteuert wird, der ein PID-Verhalten aufweist.

3. Verfahren nach Anspruch 2, **dadurch gekennzeichnet,** daß der Leistungssteller (25) ein Triac ist, welches im Nulldurchgang schaltet.

4. Lötvorrichtung zur Durchführung des Verfahrens nach einem der Ansprüche 1 bis 3, bei dem längs des Lötspitzenkörpers (1) mindestens zwei Temperaturfühler (4,6) in gegenseitigem Abstand auf der Längsachse angeordnet sind,
wobei ferner eIne rechnergesteuerte Temperaturreglung vorhanden ist, die aus einem Rechner (8), einem Regler (13) und einem Schaltglied (10) zur Ansteuerung des Heizkörpers (3) in der Lötspitze besteht, wobei die Signale der Temperaturfühler auf den Regler (13) zurückgeführt sind und der Regler das Schaltglied ansteuert, um die Temperatur der Lötspitze konstant zu halten,
dadurch gekennzeichnet, daß
einer der Temperaturfühler (6) in dem sich konisch verjüngende Ende des Lötspitzenkörpers angeordnet ist,
und der Rechner (8), aus den momentan von den Temperaturfühlern (4, 5, 6) gemessenen Temperaturen auf die momentane Temperatur der Lötspitze (12) rückschließen lässt, den Schalter (10) so steuert, daß die Temperatur der Lötspitze (12) unabhängig vom Belastungsfall konstant bleibt.

5. Lötkolben nach Anspruch 4, **dadurch gekennzeichnet,** daß ein anderer der Temperaturfühler (4) durch den Heizkörper (3) selbst gebildet ist.

## Claims

1. A method for regulating the operating temperature of a soldering iron to a predetermined value by means of a temperature sensor arrangement situated in the soldering iron, which arrangement, independently of the measured temperature, connects or respectively disconnects a heating body of the soldering iron, in which to keep the temperature constant at the soldering bit (12) independently of the thermal flow flowing off from the soldering bit (12), the soldering bit body (1) is conceived in its longitudinal extent as a regulating stage, on which several temperature sensors (4,5,6) are arranged at a reciprocal distance from each other, and the values picked up by the temperature sensors (4,5,6) are passed to a computer (8), which via a computational model determines the non-measured temperature of the soldering bit (12) and keeps it constant, independently of the thermal flow, characterised in that the rate of temperature change is picked up by the temperature sensors (4,5,6) and passed to the computer (8).

2. A method according to Claim 1, characterised in that for the supply of power to the heating body (3) a power plate (25) is used, which is controlled by a regulator, which has a PID behaviour.

3. A method according to Claim 2, characterised in that the power plate (25) is a triac, which connects in zero passage.

4. A soldering device to carry out the method according to one of Claims 1 to 3, in which at least two temperature sensors (4,6) are arranged at a reciprocal distance on the longitudinal axis along the soldering bit body (1), in which in addition there is a computer-controlled temperature regulation arrangement, which consists of a computer (8), a regulator (13) and a connecting device (10) to control the heating body (3) in the soldering bit, in which the signals of the temperature sensors are returned to the regulator (13) and the regulator controls the connecting device, in order to keep the temperature of the soldering bib constant,
characterised in that
one of the temperature sensors (6) is arranged in the conically narrowing end of the soldering bit body,
and the computer (8), from the temperatures measured instantaneously by the temperature sensors (4,5,6), allows the instantaneous temperature of the soldering bit (12) to be inferred, controls the switch (10) such that the temperature of the soldering bit (12) remains constant independently of the type of load.

5. A soldering iron according to Claim 4, characterised in that another of the temperature sensors (4) is formed by the heating body (3) itself.

## Revendications

1. Procédé pour le réglage de la température de service d'un fer à souder sur une valeur prédéterminée à l'aide d'un arrangement de sondes pyrométriques qui se trouve dans le fer à souder et qui, en fonction de la température mesurée, met en ou hors circuit un élément de chauffage du fer à souder, étant précisé que pour le maintien à une valeur constante de la température au niveau de la panne (12), indépendamment du flux thermique qui s'écoule de la panne (12), le corps de panne (1) est conçu dans son étendue longitudinale en tant que système asservi sur lequel plusieurs sondes pyrométriques (4, 5, 6) sont espacées réciproquement les unes des autres, et que les valeurs détectées par les sondes pyrométriques (4, 5, 6) sont transmises à un ordinateur (8) qui détermine la température non mesurée de la panne (12) par l'intermédiaire d'un modèle mathématique et la maintient constante indépendamment du flux thermique, caractérisé en ce que la vitesse de variation de la température est détectée par les sondes pyrométriques (4, 5, 6) et est transmise à l'ordinateur (8).

2. Procédé selon la revendication 1, caractérisé en ce qu'un dispositif de réglage de puissance (25) est utilisé pour délivrer la puissance à l'élément de chauffage (3) et est commandé par un régulateur qui présente un comportement à triple action.

3. Procédé selon la revendication 2, caractérisé en ce que le dispositif de réglage de puissance (25) est un triac qui commute au passage par zéro.

4. Dispositif de soudage pour la mise en oeuvre du procédé selon l'une des revendications 1 à 3, dans lequel, le long du corps de panne (1), au moins deux sondes pyrométriques (4, 6) sont disposées sur l'axe longitudinal à distance l'une de l'autre,
étant précisé qu'il est en outre prévu une régulation de température commandée par ordinateur, se composant d'un ordinateur (8), d'un régulateur (13) et d'un organe de commutation (10) pour la commande du corps de chauffage (3) dans la panne, que les signaux des sondes pyrométriques sont ramenés au régulateur (13) et que le régulateur commande l'organe de commutation afin de maintenir constante la température de la panne, caractérisé en ce que l'une des sondes pyrométriques (6) est disposée dans l'extrémité du corps de panne qui se rétrécit sous la forme d'un cône,
et en ce que l'ordinateur (8) permet, à partir des températures mesurées instantanément par les sondes pyrométriques (4, 5, 6) de déduire la température instantanée de la panne (12) et commande le commutateur (10) de telle sorte que la température de la panne (12) reste constante indépendamment de la chute de charge.

5. Fer à souder selon la revendication 4, caractérisé en ce qu'une autre des sondes pyrométriques (4) est constituée par l'élément de chauffage (3) lui-même.
